(19) Europäisches Patentamt
European Patent Office
Office européen des brevets

(11) Veröffentlichungsnummer: **0 205 846 B1**

# (12) EUROPÄISCHE PATENTSCHRIFT

(45) Veröffentlichungstag der Patentschrift: **02.10.91**

(51) Int. Cl.5: **C08F 20/12**, C08F 2/38

(21) Anmeldenummer: **86106178.6**

(22) Anmeldetag: **06.05.86**

## (54) Verfahren zur Herstellung von niedermolekularen hydroxyfunktionellen (Meth)acrylatpolymeren, deren Verwendung zur Herstellung von Isocyanat-Endgruppen enthaltenden Prepolymeren sowie daraus hergestellte Dicht- und Klebstoffe.

(30) Priorität: **24.05.85 DE 3518708**

(43) Veröffentlichungstag der Anmeldung:
**30.12.86 Patentblatt 86/52**

(45) Bekanntmachung des Hinweises auf die Patenterteilung:
**02.10.91 Patentblatt 91/40**

(84) Benannte Vertragsstaaten:
**AT BE CH DE FR GB IT LI LU NL SE**

(56) Entgegenhaltungen:
**EP-A- 0 001 092**
**FR-A- 2 385 742**
**FR-A- 2 423 513**

(73) Patentinhaber: **Teroson GmbH**
**Hans-Bunte-Strasse 4**
**W-6900 Heidelberg 1(DE)**

(72) Erfinder: **Duck, Edward, Prof. Dr.**
**Waldblick 5**
**W-6906 Gauangelloch(DE)**
Erfinder: **Scheffler, Ingolf, Dr.**
**Merianstr. 14**
**W-6908 Wiesloch(DE)**

(74) Vertreter: **UEXKÜLL & STOLBERG Patentanwälte**
**Beselerstrasse 4**
**W-2000 Hamburg 52(DE)**

EP 0 205 846 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur Herstellung von hydroxyfunktionellen Methacrylat- oder Acrylatpolymeren niederen Molekulargewichtes, deren Hydroxylgruppen überwiegend in α,ω-Stellung der Polymerketten stehen, sowie deren weitere Verwendung. Diese Acrylat- oder Methacrylatpolymeren können durch Reaktion mit geeigneten Diisocyanaten in Polyurethanprepolymere mit überwiegend endständigen Isocyanatgruppen umgewandelt werden. Derartige Polyurethanprepolymere eignen sich zur Herstellung von feuchtigkeitshärtenden einkomponentigen Dichtstoffen und Klebstoffen.

Die Herstellung von hydroxylgruppenhaltigen Acrylat- oder Methacrylatpolymeren ist im Prinzip bekannt, ein übliches Verfahren ist die radikalische Copolymerisation von Hydroxyethyl- oder Hydroxypropylmethacrylat oder -acrylat mit nicht funktionellen Methacrylat- oder Acrylatestern. Wegen des bevorzugten Einbaus der hydroxyfunktionellen Comonomeren in die Polymerketten verarmt das Monomergemisch rasch an den hydroxyfunktionellen Comonomeren. Bei hohen Umsätzen entstehen daher am Anfang der Reaktion Polymermoleküle mit hohem Hydroxylgruppengehalt und am Ende der Polymerisation Polymermoleküle mit geringem, im Extremfall gar keinem Hydroxylgruppengehalt. Insbesondere bei niedrigen Hydroxylgruppengehalten und niedrigen Molekulargewichten entstehen daher chemisch sehr inhomogene Polymere mit erheblichen Anteilen an hydroxylgruppenfreien Polymermolekülen. Zur Herstellung von Polyurethanprepolymeren für die Verwendung in Dichtstoffen sind derartige uneinheitliche hydroxylgruppenhaltige Polymermischungen nicht geeignet, da die von einem Dichtstoff geforderten Eigenschaften wie einheitliche Durchhärtung, elastische Eigenschaften sowie geringe Oberflächenklebrigkeit damit nicht erzielbar sind.

Um chemisch homogenere Polymere zu erhalten, ist in der Patentliteratur mehrfach ein zweistufiges Verfahren beschrieben worden. Dabei wird in der ersten Stufe durch Copolymerisation von Acrylsäure oder Methacrylsäure ein Carboxylgruppen enthaltendes Polymer hergestellt. In einer nachfolgenden Reaktion werden diese Carboxylgruppen dann mit Alkylenoxiden wie Ethylenoxid, Propylenoxid oder Glycid in Gegenwart von basischen Katalysatoren verestert (vergl. z.B. US-PS 31 16 270, GB-PS 10 02 343 und DE-OS 30 05 945). Obwohl dieses Verfahren eine Verbesserung gegenüber dem oben erwähnten konventionellen Weg bedeutet, sind die Hydroxylgruppen auch hier nur statistisch verteilt, außerdem ist die Veresterung der Carboxylgruppen nicht vollständig. Beide Tatsachen führen, besonders bei den niedrigen Gehalten an Hydroxylgruppen, wie sie für eine Verwendung in Dichtstoffen notwendig sind, zu schlechten Produkteigenschaften.

In der DE-PS 29 15 864 wird die Herstellung von hydroxylgruppenhaltigen Acrylaten unter Verwendung von 2-Hydroxyethylacrylat und 2-Mercaptoethanol als Hydroxylgruppen enthaltendem Regler beschrieben. Bei geeigneter Wahl der Reaktionsparameter werden auf diese Weise zwar Copolymere erhalten, die statistisch etwa 2 Hydroxylgruppen pro Molekül enthalten. Dabei wird die Hydroxylgruppe, die der Regler überträgt, am Ende des Polymermoleküls eingebaut, während die Hydroxylgruppe des Comonomers (2-Hydroxyethylacrylat) an einer zufälligen Stelle des Makromoleküls eingeführt wird. Wie die Autoren zugeben, stellen die so hergestellten Copolymeren jedoch ebenfalls Gemische dar, die erhebliche Anteile an Polymermolekülen enthalten können, die keine oder nur eine funktionelle Gruppe enthalten.

Aus der EP-PS 68 887 ist ein Verfahren zur Herstellung von Acrylat- oder Methacrylatpolymeren niedrigen Molekulargewichtes mit α,ω-endständigen Hydroxylgruppen bekannt. Dieses "Gruppenübertragungs-Polymerisation" genannte Verfahren verwendet Silylketenacetale mit einer Hydroxylgruppe, die durch Silylierung geschützt ist, als Initiator. Mit geeigneten Katalysatoren werden "lebende" Polymere erhalten, die nach Kupplung mit einer Dihalogenverbindung und Hydrolyse das α,ω-dihydroxyfunktionelle Acrylat- oder Methacrylatpolymer liefern. Dieses Verfahren ist nicht nur aufwendig (es muß unter absolutem Ausschluß von Feuchtigkeit gearbeitet werden), ein weiterer Nachteil ist die Verwendung von sehr teuren Ausgangsmaterialien, nämlich den Silylketenacetalen. Dies ist besonders bei Polymeren niederen Molekulargewichtes ein entscheidender wirtschaftlicher Nachteil, da das Silylketenacetal in stöchiometrischen Mengen benötigt wird.

Aufgabe der vorliegenden Erfindung ist es, ein einfacheres Verfahren zur Herstellung von hydroxylgruppenhaltigen Acrylat- oder Methacrylatpolymeren niederen Molekulargewichtes zu finden; dabei sollen sich die Hydroxylgruppen überwiegend in α,ω-Stellung der Polymerkette befinden, damit bei den späteren Kondensationsreaktionen ein überwiegend lineares Wachstum stattfindet.

Die Aufgabe wird mit Hilfe eines radikalischen Polymerisationsverfahrens gelöst, bei dem sowohl der Initiator als auch der verwendete Regler eine Hydroxylgruppe auf das Polymermolekül übertragen können.

Gegenstand der Erfindung ist demgemäß ein Verfahren zur Herstellung von niedermolekularen (Meth)-acrylatpolymeren mit im wesentlichen α,ω-endständigen Hydroxylgruppen mit einem Hydroxyläquivalentgewicht von 500 bis 5000, welches dadurch gekennzeichnet ist, daß man jeweils bezogen auf die Monomeren-Mischung - 10 bis 100 Gew.% eines Methacrylsäurealkylesters mit 1 bis 14 Kohlenstoffatomen im Alkylrest

und/oder 0 bis 100 Gew.% eines Acrylsäurealkylesters mit 2 bis 14 Kohlenstoffatomen im Alkylrest und 0 bis 40 Gew.% eines mit den Methacryl- oder Acrylsäureestern copolymerisierbaren Monomers in Gegenwart eines zur Übertragung von Hydroxylgruppen auf das Polymermolekül befähigten Initiators aus der Gruppe der Peroxide, Hydroperoxide oder Azoverbindungen oder unter Einwirkung von UV-Strahlung und in Gegenwart von Hydroxylgruppen enthaltenden Reglern der allgemeinen Formel

$HO - A - S_x - B - OH$    (I)

in der A und B jeweils einen zweiwertigen organischen Rest bedeuten und $x \geqq 2$ ist, einer radikalischen Polymerisation unterwirft.

A und B können gleich oder verschieden sein. Vorzugsweise bedeuten A und B einen gegebenenfalls substituierten o-, m-, oder p-Arylenrest, eine $-(CH_2)_y$ Gruppe mit $y \geqq 2$, oder eine

$$-\overset{\overset{\displaystyle S}{\|}}{C} - M - (CH_2)_y\text{-Gruppe}$$

mit $y \geqq 2$, wobei M ein Sauerstoffatom oder ein Rest

$$R-\overset{|}{N}-$$

mit R = Alkyl ist.

Vorzugsweise werden als Regler solche mit symmetrischer Molekülstruktur vom Disulfid-Typ verwendet. In Anwesenheit von Radikalbildnern, z.B. dem wachsenden Polymer-Radikal, zerfallen solche Disulfide in zwei Thiylradikal-Bruchstücke. Die so gebildeten Thiyl-Radikale können einerseits mit einem wachsenden Polymerradikal reagieren und beenden so dessen Wachstum. Außerdem können sie mit vorhandenen Monomeren eine neue Polymerisationskette starten. Da mit jedem Thiyl-Radikal auch eine Hydroxylgruppe auf die Polymerkette übertragen wird, können keine Polymerketten-Enden entstehen, die keine Hydroxylfunktion tragen, wie dies bei der Verwendung von Mercaptanen (einschließlich 2-Mercaptoethanol) als Kettenübertragungsreagens der Fall ist. Die verwendete Menge an Regler beträgtbezogen auf die Monomeren - etwa 2 bis 20, vorzugsweise 2 bis 8 Mol%.

Es wurde überraschend gefunden, daß auch die einfachen und leicht zugänglichen hydroxyfunktionellen Disulfide, wie z.B. das Bis-(hydroxyethyl)-disulfid erfolgreich als funktionalisierende Regler eingesetzt werden können, obwohl diese in der Literatur als wenig aktive Kettenüberträger beschrieben werden (vergl. z.B. R.M. Pierson, A.J. Constanza und A.H. Weinstein, Journal of Polymer Science 17, 221 (1955)). Weitere bevorzugt verwendete Disulfide sind Bis-(2-hydroxypropyl)-disulfid, Bis-(2-hydroxymethylphenyl)-disulfid, Bis-(2-hydroxyethylxanthogen)-disulfid und Bis-(N-methyl-N-hydroxyethylthiocarbamoyl)-disulfid. Die Herstellung der Verbindungen ist in Houben-Weyl, Methoden der organischen Chemie, 4. Aufl., Band 9, Seite 55ff beschrieben.

Als Initiatoren können hydroxylgruppenhaltige organische Peroxide oder Hydroperoxide oder Hydroxylgruppen enthaltende Azoverbindungen verwendet werden, vorzugsweise wird jedoch eine wässrige Wasserstoffperoxid-Lösung als Initiator eingesetzt. Bezogen auf die Monomeren werden etwa 2 bis SO, vorzugsweise 2 bis 20 Gew.% einer 60%-igen $H_2O_2$-Lösung eingesetzt. Zur Beschleunigung der Polymerisation werden Redox-Reagentien, wie z.B. Natriumbisulfit, Natrium-Formaldehyd-sulfoxylat, Ascorbinsäure, Isoascorbinsäure, Eisen(II)-salze, Kobalt(II)-salze, Kupfer(II)-salze, Mangan(II)-salze oder Cer(III)-salze eingesetzt.

Die Polymerisation kann in Substanz, in einem geeigneten organischen Lösungsmittel oder in wässriger Emulsion durchgeführt werden. Eine bevorzugte Durchführungsform ist die Polymerisation in einem mit Wasser mischbaren Lösungsmittel, so daß während der gesamten Synthese eine homogene Lösung vorliegt, was zu einem Produkt mit einheitlicher Molekulargewichtsverteilung führt. Das mittlere Molekulargewicht sowie das Hydroxyläquivalentgewicht (berechnet aus der Hydroxylzahl) lassen sich in weiten Grenzen variieren durch ein geeignetes Verhältnis von Initiator und Regler zum eingesetzten Monomer. Wenn mehr als zwei Hydroxylgruppen je Molekül benötigt werden, so kann eine kleine Menge eines Hydroxylgruppen enthaltenden Acryl- oder Methacrylsäureesters copolymerisiert werden; Beispiele dafür sind 2-Hydroxyethylmethacrylat oder 2-Hydroxyethylacrylat.

Dabei sind die von diesen Comonomeren stammenden Hydroxylgruppen natürlich statistisch entlang

der Polymerkette verteilt.

Eine besonders gleichmäßige Verteilung wird dadurch erzielt, daß nach dem Zulaufverfahren polymerisiert wird. Dabei werden das Comonomeren-Gemisch sowie der Regler über einen längeren Zeitraum in dem Maße in das Reaktionsgefäß zudosiert, wie diese durch die Polymerisationsreaktion verbraucht werden. Nach diesem Verfahren kann bis zu praktisch quantitativen Umsätzen polymerisiert werden, ohne daß sich daraus nachteilige Eigenschaften für das Produkt ergeben.

Die mittleren Molekulargewichte der Copolymerisate (bestimmt durch Gelpermeationschromatographie) liegen zwischen 1.000 und 10.000, vorzugsweise jedoch zwischen 2.000 und 5.000. Das Hydroxyläquivalentgewicht (bestimmt durch Acetylierung) der Copolymerisate liegt zwischen 500 und 5.000, vorzugsweise zwischen 1.000 und 2.500; daraus resultiert eine mittlere Anzahl an Hydroxylgruppen pro Molekül zwischen 1,5 und 3,5, vorzugsweise zwischen 2,0 und 3,0.

Als Monomere kommen hauptsächlich Ester der Acryl- oder Methacrylsäure der allgemeinen Formel

$$CH_2 = \overset{R}{\overset{|}{C}} - COOR^2 \qquad (II)$$

in Frage, wobei R ein Wasserstoffatom oder eine Methylgrupe bezeichnet und $R^2$ eine Alkylgruppe mit 1 bis 14 Kohlenstoffatomen bedeutet. Die Alkylgruppe kann linear oder verzweigt sein. Typische Beispiele sind n-Butylacrylat oder -methacrylat, 2-Ethylhexylacrylat oder -methacrylat, Methylmethacrylat, Dodecylacrylat oder -methacrylat. Bezogen auf die Monomeren-Mischung werden 10 bis 100, vorzugsweise 30 bis 100 Gew.% Methacrylat und/oder 0 bis 100, vorzugsweise 0 bis 50 Gew.% Acrylat eingesetzt.

Ein Teil der Acrylat- oder Methacrylat-Monomeren kann dabei durch andere Monomere ersetzt werden, die mit dem Acrylat- oder Methacrylat-Monomeren copolymerisierbar sind. Als Beispiele hierfür seien genannt: Styrol, Butadien, Isopren, Acrylsäure, Methacrylsäure, Ester und Halbester der Maleinsäure, Ester und Halbester der Itakonsäure, Acrylnitril, Acrylamid und Glycidylacrylat oder -methacrylat. Art und Menge der jeweiligen Comonomeren werden nach dem jeweiligen Verwendungszweck des Polymeren ausgewählt, wobei man bezogen auf die Monomeren-Mischung bis zu 40, vorzugsweise bis zu 20 und u.U. nur bis zu 10 Gew.% dieser Co-Monomeren einsetzt.

Die Reaktionstemperatur richtet sich nach der Reaktivität der eingesetzten Monomeren und des verwendeten Initiators sowie nach der Art des Lösungs- oder Dispersionsmittels. Sie liegt üblicherweise zwischen 30° und 140° C, vorzugsweise zwischen 50° und 90° C. Dabei wird die Reaktionstemperatur vorzugsweise auf dem vorbestimmten Niveau konstant gehalten, d.h. die entstehende Polymerisationswärme wird gegebenenfalls durch Kühlung aus dem Reaktionsgemisch abgeführt.

Die Reaktionszeit wird durch die Reaktivität der Monomeren bestimmt; bei dem bevorzugt angewandten Zulaufverfahren wird die Reaktion nach dem Ende der Zudosierung der Monomermischung und des Reglers noch so lange fortgesetzt, bis praktisch alle Monomeren verbraucht sind.

Gegenstand der Erfindung ist ferner die Umwandlung des oben beschriebenen hydroxylgruppenhaltigen (Meth)acrylat(co)polymers in ein isocyanatgruppenhaltiges Prepolymer durch Umsetzung mit organischen Diisocyanaten nach an sich bekannten Methoden.

Vor der Umsetzung des Hydroxylgruppen enthaltenden Polymers mit Diisocyanaten werden Wasser und mit Isocyanaten reagierende Lösungsmittel wie Alkohole durch Destillation, gegebenenfalls im Vakuum, entfernt. Für den Fall, daß besondere Reinheitsanforderungen an das Polymer gestellt werden, können Initiatorreste, Aktivatorreste und nicht umgesetzte Anteile des Reglers durch eine Wäsche aus dem Polymer entfernt werden. Vorzugsweise wird dazu die Polymerlösung mit einem mit Wasser nicht mischbaren Lösungsmittel versetzt, um eine Trennung der Phasen zu beschleunigen.

Das von Wasser und Lösungsmittel befreite Hydroxylgruppen enthaltende Polymer wird dann in bekannter Weise mit Diisocyanaten umgesetzt, so daß ein Polymer niedrigen Molekulargewichtes mit reaktiven Isocyanatgruppen an den Enden des Moleküls entsteht. Beispiele für geeignete Diisocyanate sind Diphenylmethandiisocyanat (MDI), Toluylendiisocyanat (TDI), Naphthalindiisocyanat, p-Phenylendiisocyanat, trans-1,4-Cyclohexandiisocyanat (CHDI), 1,3-Bis(isocyanatomethyl)-benzol, 4,4'-Dicyclohexylmethandiisocyanat ($H_{12}MDI$), 1,3-Bis(isocyanatomethyl)-cyclohexan ($H_6XDI$), Hexamethylendiisocyanat (HDI), 3-Isocyanatomethyl-3,5,5-trimethylcyclohexylisocyanat (IPDI), meta-Tetramethylxylol-diisocyanat oder para-Tetramethylxylol-diisocyanat (m-TMXDI, p-TMXDI). Für Anwendungsfälle, bei denen es auf die Lichtbeständigkeit des ausgehärteten Polymers ankommt, wird man vorzugsweise aliphatische oder cycloaliphatische Diisocyanate verwenden, wie z.B. CHDI, $H_{12}MDI$, $H_6XDI$, HDI, IPDI, m-TMXDI oder p-TMXDI.

Die Umsetzung des Hydroxylgruppen enthaltenden Polymers mit dem Diisocyanat kann entweder bei

Raumtemperatur oder bei erhöhter Temperatur zwischen 50° und 100°C in an sich bekannter Weise erfolgen, wobei zur Beschleunigung der Reaktion die bekannten Polyurethankatalysatoren zugesetzt werden können. Beispiele hierfür findet man u.a. bei J.H. Saunders und K.C. Frisch, Polyurethanes Chemistry and Technology, Part I., S. 129-217, John Wiley & Sons, Inc., New York, 1962. Die Reaktion kann entweder in Substanz durchgeführt werden oder es können mit den Isocyanaten nicht reagierende Verdünnungsmittel zugesetzt werden. Solche Verdünnungsmittel sind beispielsweise Weichmacher wie die Ester der Phthalsäure, Adipinsäure oder Sebacinsäure.

Eine weitere Variante stellt die Verwendung von reaktiven Verdünnern dar, d.h. zwei oder mehrere Hydroxylgruppen tragende Oligomere, die mit den Hydroxylgruppen enthaltenden Acrylat- oder Methacrylatpolymeren verträglich, also ohne Phasentrennung mischbar sind. Beispiele für solche reaktiven Verdünner sind hydroxylgruppenhaltige Polyester niederen Molekulargewichtes oder hydroxylgruppenhaltige Polyether niederen Molekulargewichtes, wie z.B. Polypropylenoxide, Polyethylenoxide und deren Copolymere sowie Polytetramethylenoxide. Beispiele für hydroxylgruppenhaltige Polyester sind Kondensationsprodukte aus Dicarbonsäuren, wie Adipinsäure, Sebacinsäure, Azelainsäure, Hexahydrophthalsäure oder Phthalsäure, und zweiwertigen Alkoholen wie Ethylenglykol, 1,4-Butandiol, 1,6-Hexandiol oder 1,10-Decandiol.

In der Regel werden pro Hydroxyläquivalent zwei Isocyanatäquivalente des Diisocyanates eingesetzt und die Reaktion wird so lange fortgesetzt, bis alle Hydroxylgruppen abreagiert haben (gemessen durch die Abnahme der Isocyanatgruppen).

Gegenstand der Erfindung sind weiterhin einkomponentige, vorzugsweise transparente, feuchtigkeitshärtende Kleb- und Dichtstoffe auf Basis des erfindungsgemäß hergestellten Isocyanatendgruppen enthaltenden Prepolymers, gegebenenfalls von anderen isocyanatgruppenhaltigen Prepolymeren mit Polyether- oder Polyestergruppierungen im Rückgrat, von üblichen Weichmachern sowie gegebenenfalls geeigneten Füllstoffen, Pigmenten, Thixotropierungsmitteln, Katalysatoren und Härtern, z.B. latenten Aminhärtern.

Letztere können blockierte Di- oder Polyamine sein. Solche blockierten Amine sind z.B. die in der DE-AS 21 16 882, DE-AS 21 25 247, DE-AS 25 21 841 und DE-AS 21 66 502 genannten Enamine, ferner die in der DE-AS 24 46 438 genannten Oxazolidine, oder Aldimine oder Ketimine, wie sie beispielsweise in der GB-PS 10 64 841 oder in der DE-OS 33 06 373 beschrieben werden.

Eine bevorzugte Anwendung finden diese Prepolymeren in transparenten Dichtstofformulierungen, die keine Pigmente und als Füllstoffe nur solche enthalten, die sehr feinteilig sind und/oder einen ähnlichen Brechungsindex haben wie das Prepolymer. Beispiele für solche Füllstoffe sind hochdisperse Kieselsäuren, sehr feinteilige Glaspulver oder Glasfasern, sehr feinteilige Polymethylmethacrylat-Pulver, sehr feinteilige Polystyrol-Pulver oder Pulver aus Copolymeren des Methylmethacrylates mit anderen Methacrylsäureestern, Acrylnitril oder Styrol. Auswahlkriterien sind hierbei die Kornfeinheit des Polymerpulvers und die Ähnlichkeit des Brechungsindex mit dem des Prepolymers oder der Prepolymermischung. Bei weitgehend identischem Brechungsindex darf der Füller eine mittlere Teilchengröße bis zu 200, in Ausnahmefällen bis zu 400 µm aufweisen. Sonst sollte die mittlere Teilchengröße 40 bis 50 µm nicht übersteigen. Besonders hervorzuheben ist bei diesen transparenten Dichtstoff-Formulierungen die gute Lichtbeständigkeit, die ausschließlich auf die gute Beständigkeit des Acrylat- bzw. besonders des Methacrylat-Rückgrates zurückzuführen ist.

Die in den nachfolgenden typischen Beispielen genannten Teile und Prozente sind Gewichtsteile und Gewichtsprozente. Die angegebenen Hydroxyläquivalentoewichte (E(OH)) wurden durch Acetylierung mit Acetanhydrid und Titration mit Kaliumhydroxid bestimmt, die Isocyanatäquivalentgewichte (E(NCO)) wurden nach der Dibutylamin-Methode bestimmt. Die genannten mittleren Molekulargewichte (M(GPC)) wurden mittels Gelpermeationschromatographie bestimmt und stellen nicht-korrigierte Peak-Werte (gegen Polystyrol-Standards geeicht) dar.

Beispiel 1

In einem Vierhalskolben mit Rückflußkühler, Rührer, Innenthermometer und zwei Zulaufgefäßen werden 150 Teile Isopropanol, 20 Teile Wasser, 0,004 Teile Eisen(II)-sulfat, 0,04 Teile Ethylendiamintetraessigsäure und 0,6 Teile 70%ige Perchlorsäure vorgelegt, von gelöstem Sauerstoff befreit und in einem Stickstoffstrom auf 80°C aufgeheizt. Von 300 Teilen n-Butylmethacrylat werden jetzt 5% auf einmal in den Reaktionskolben gegeben, anschließend tropfen 55 Teile 60%ige wässrige Wasserstoffperoxidlösung innerhalb von 10 Min. in das Reaktionsgefäß. Nach dem Abklingen der exothermen Reaktion werden das restliche Monomer sowie eine Lösung von 13 Teilen Bis(hydroxyethyl)disulfid in 50 Teilen Isopropanol innerhalb von 5 Stunden zudosiert. Danach wird noch 2 Stunden lang bei 75°C gerührt. Nach dem Abkühlen wird die Polymerlösung mit 500 ml Toluol versetzt und die sich abscheidende wässrige Phase abgetrennt. Die organische Phase wird noch viermal mit gesättigter wässriger Natriumbisulfit-Lösung und anschließend mit Wasser gewaschen. Die leicht trübe Polymerlösung wird klar filtriert und das Lösungsmittel im Vakuum abdestilliert. Die Ausbeute an hochviskosem, klarem, farblosem Polymer ist fast quantitativ. E(OH):3.450, M(GPC):3.650.

Beispiel 2

Es wird wird in Beispiel 1 beschrieben verfahren, jedoch werden 26 Teile Bis(hydroxyethyl)disulfid eingesetzt. E(OH):2.501; M(GPC):4.270.

Beispiel 3

Es wird wie in Beispiel 1 verfahren, jedoch werden 39 Teile Bis(hydroxyethyl)-disulfid eingesetzt. E-(OH):1.844; M(GPC):3.760.

Beispiel 4

Es wird wie in Beispiel 1 verfahren, jedoch werden zusätzlich 22 Teile Hydroxyethylmethacrylat im Monomer gelöst. E(OH):1.219, M(GPC):3.350.

Vergleichsbeispiel 1a

Es wird wie im Beispiel 1 beschrieben polymerisiert, jedoch wird keine Reglerlösung verwendet. E(OH)-:7,633; M(GPC):3.800.

Vergleichsbeispiel 1b

Die Durchführung der Polymerisation erfolgt wie im Beispiel 1 beschrieben, anstelle von Bis-(hydroxyethyl)disulfid werden 6,5 Teile 2-Mercaptoethanol (gleiche molare Menge wie im Beispiel 1) eingesetzt. E(OH):5.610; M(GPC):3.850.

Wie aus vorstehenden Vergleichsbeispielen ersichtlich, wird ohne Verwendung des erfindungsgemäßen Reglers nur eine wesentlich geringere Hydroxylgruppenfunktionalität erreicht.

Beispiel 5

300 Teile eines nach Beispiel 4 hergestellten Hydroxylgruppen enthaltenden Polymers werden mit 22 Teilen Dioctylphthalat versetzt und in einem mit Innenthermometer, Rückflußkühler und Zulaufgefäß versehenen Reaktionskolben unter trockenem Stickstoff auf 50 °C erwärmt. Danach werden 103,8 Teile IPDI hinzugefügt und es wird unter Rühren auf 80 °C erwärmt. Nach 5 Stunden beträgt das Isocyanatäquivalentgewicht (titrimetrisch) 627. Danach werden weitere 319,8 Teile hydroxylgruppenhaltiges Polymer des Beispiels 4 in 159,2 Teilen Dioctylphthalat gelöst zum Reaktionsgemisch gegeben. Nach weiteren 7 Stunden Reaktionszeit beträgt das E(NCO) 2.286 und ändert sich nicht mehr. Unter Feuchtigkeitsausschluß wird das Isocyanatgruppen enthaltende Prepolymer in dicht schließende Gebinde abgefüllt.

Vergleichsbeispiel 5a

1283,9 Teile eines difunktionellen hydroxylgruppenhaltigen Polypropylenglycols mit einem E(OH) von 1.413 werden mit 202,1 Teilen IPDI und 1 Teil Zinn(II)-octoat analog wie im Beispiel 5 umgesetzt. Wegen der niedrigen Viskosität wird jedoch auf die Zugabe von Dioctylphthalat verzichtet. Am Ende der Reaktion beträgt das E(NCO) 1.908.

Vergleichsbeispiel 5b

499 Teile eines difunktionellen hydroxylgruppenhaltigen Polyesters aus Adipinsäure und Neopentylglycol mit einem E(OH) von 518 und 216,2 Teile IPDI werden analog zu Beispiel 5 umgesetzt. Am Ende der Reaktion beträgt das E(NCO) 785.

Beispiel 6 und Vergleichsbeispiele 6a, 6b

Die Isocyanatgruppen enthaltenden Prepolymeren der Beispiele 5, 5a und 5b werden jeweils mit der

stöchiometrischen Menge eines Oxazolidins gemäß der DE-AS 24 46 438 als latentem Härter, hochdisperser Kieselsäure sowie gegebenenfalls weiterem Dioctylphthalat unter Vakuum gemischt. Danach werden die Mischungen als etwa 5mm breite Raupe auf eine Glasplatte aufgebracht und bei 23° C und 55% relativer Luftfeuchtigkeit ausgehärtet. Dabei werden Hautbildungszeiten zwischen einer und mehreren Stunden beobachtet (s. Tabelle). Nach vollständiger Durchhärtung der Prüflinge (etwa 3 Wochen) werden diese einer UV-Wärmealterung unterworfen. Dazu werden die Proben 430 Stunden lang mit einem UV-Strahler bestrahlt, der 16 der in der DIN 52455, Blatt 3 beschriebenen Einzelstrahler pro $m^2$ gleichmäßig verteilt enthält. Die Proben werden in einem Abstand von 25 cm dieser Strahlung direkt ausgesetzt. Wie aus der nachfolgenden Tabelle ersichtlich ist nur der Dichtstoff auf Basis des erfindungsgemäßen Polymers nach dieser Bestrahlung unverändert (Versuch 6).

Tabelle

| Versuch | 6 | 6a | 6b |
|---|---|---|---|
| Polymer des Beispiels 5 (Teile) | 28,8 | - | - |
| Polymer des Beispiels 5a (Teile) | - | 28,4 | - |
| Polymer des Beispiels 5b (Teile) | - | - | 21,4 |
| DOP (Teile) | 13,4 | 14,0 | 18,0 |
| Oxazolidin (Teile) | 3,8 | 3,6 | 6,6 |
| Kieselsäure (Aerosil)® (Teile) | 4,0 | 4,0 | 4,0 |
| Hautbildung (h) | 1 | 2 | 1 |
| Klebfrei nach (h) | 5 | >9 | 3 |
| Aussehen nach Härtung | farblos, klar | farblos klar | farblos, leichte Eintrübung, |
| Aussehen nach 430 Stunden UV-Bestrahlung | leichter Gelbstich, klar, klebfrei, mechanische Eigenschaften unverändert | leicht gelbliche mittelviskose Flüssigkeit, vollständig depolymerisiert | farblos, Oberfläche klebrig, ca. 3 mm starke Schicht besteht aus klebriger, hochviskoser Masse |

ugs/Lsch

## Patentansprüche

1. Verfahren zur Herstellung von niedermolekularen (Meth)acrylatpoleren mit im wesentlichen $\alpha,\omega$-endständigen Hydroxylgruppen mit einem Hydroxyläquivalentgewicht von 500 bis 5.000, dadurch gekennzeichnet , daß man - jeweils bezogen auf die Monomerenmischung - 10 bis 1 00 Gew.% eines Methacrylsäurealkylesters mit 1 bis 14 Kohlenstoffatomen im Alkylrest und/oder 0 bis 100 Gew.% eines Acrylsäurealkylesters mit 2 bis 14 Kohlenstoff- atomen im Alkylrest und 0 bis 40 Gew.% eines mit den Methacryl- oder Acrylsäureestern copolymerisierbaren Monomers in Gegenwart eines zur Übertragung von Hydroxylgruppen auf das Polymermolekül befähigten Initiators aus der Gruppe der hydroxylgruppenhaltigen Peroxide, Hydroperoxide oder Hydroxylgruppen enthaltende Azoverbindungen und in Gegenwart von einer Redoxverbindung als Beschleuniger mit Hydroxylgruppen enthaltenden Reglern der allgemeinen Formel

$HO-A-S_x-B-OH$, (I)

in der A und B jeweils einen zweiwertigen organischen Rest bedeuten und x ≧ 2 ist, einer radikalischen Polymerisation unterwirft.

**2.** Verfahren nach Anspruch 1, dadurch gekennzeichnet, daß man einen Regler der allgemeinen Formel (I) verwendet, in der A und B gleich oder verschieden sind und einen gegebenen falls substituierten o-, m-, oder p-Arylenrest, eine $-(CH_2)_y$-Gruppe mit y ≧ 2 oder eine

$$-\overset{S}{\overset{\|}{C}}-M-(CH_2)_y\text{-Gruppe}$$

mit Y ≧ 2 bedeuten, wobei
M ein Sauerstoffatom oder ein Rest

$$-\overset{R}{\overset{|}{N}}- \quad \text{mit } R = \text{Alkyl ist.}$$

**3.** Verfahren nach einem der Ansprüche 1 oder 2 , dadurch gekennzeichnet, daß man eine Monomeren-Mischung aus 30 bis 100 Gew.% Methacrylat , 0 bis 50 Gew.% Acrylat und O bis 20 Gew.% eines mit den (Meth)acrylaten copolymerisierbaren Monomers einsetzt.

**4.** Verfahren nach einem der Ansprüche 1 bis 3 , dadurch gekennzeichnet, daß man als Regler symmetrische Disulfide der Formel (I) verwendet.

**5.** Verfahren nach Anspruch 4, dadurch gekennzeichnet, daß man als Regler Bis(hydroxyethyl)disulfid verwendet.

**6.** Verfahren nach einem der Ansprüche 1 bis 5 , dadurch gekennzeichnet, daß man als Initiator eine wässrige Hydroperoxidlösung verwendet.

**7.** Verfahren nach einem der Ansprüche 1 bis 6, dadurch gekennzeichnet, daß man die Comonomeren sowie den Regler dem Reaktionsgemisch in dem Maße zudosiert, wie diese durch die Polymerisationsreaktion verbraucht werden.

**8.** Verfahren nach einem der Ansprüche 1 bis 7 , dadurch gekennzeichnet, daß man zur Herstellung von Polymeren mit mehr als zwei Hydroxylgruppen je Molekül der Comonomerenmischung einen Hydroxylgruppen enthaltenden Acryl- oder Methacrylsäureester zusetzt.

**9.** Verwendung der nach dem Verfahren der Ansprüche 1 bis 9 erhältlichen niedermolekularen hydroxyfunktionellen (Meth)acrylatpolymeren zur Herstellung von Isocyanat-Endgruppen enthaltenden Prepolymeren durch Umsetzung mit Diisocyanaten.

**10.** Verwendung nach Anspruch 10, dadurch gekennzeichnet, daß man dem hydroxyfunktionellen (Meth)-acrylatpolymeren Hydroxylgruppen tragende Oligomere als reaktive Verdünner zusetzt.

**11.** Verwendung nach den Ansprüchen 10 oder 11, dadurch gekennzeichnet, daß man je Hydroxyläquivalent zwei Isocyanatäquivalente einsetzt und die Reaktion so lange fortsetzt bis alle Hydroxylgruppen abreagiert haben.

**12.** Einkomponentiger feuchtigkeitshärtender Kleb- oder Dichtstoff auf Basis eines Isocyanat-Endgruppen

enthaltenden Prepolymeren gemäß den Ansprüchen 10 bis 12, gegebenenfalls von anderen isocyanatgruppenhaltigen Prepolymeren mit Polyether- oder Polyestergruppierungen im Rückgrat, von üblichen Weichmachern sowie gegebenenfalls geeigneten Füllstoffen, Pigmenten, Thixotropierungsmitteln und Katalysatoren.

**13.** Dicht- und Klebstoff gemäß Anspruch 13, dadurch gekennzeichnet, daß er als Härter einen latenten Aminhärter, insbesondere ein Enamin, Aldimin, Ketimin oder Oxazolidin enthält.

**14.** Kleb- und Dichtstoff nach einem der Ansprüche 13 oder 14, dadurch gekennzeichnet, daß er transparent ist.

**15.** Kleb- und Dichtstoff nach Anspruch 15, dadurch gekennzeichnet, daß er nur sehr feinteilige Füllstoffe und/oder Füllstoffe mit einem ähnlichen Brechungsindex wie das Prepolymer enthält.

## Claims

**1.** Process for the preparation of low-molecular-weight (meth)acrylate polymers containing essentially $\alpha,\omega$-terminal hydroxyl groups and having an hydroxyl equivalent weight of from 500 to 5000, characterised in that, in each case based on the monomer mixture, from 10 to 100 % by weight of an alkyl methacrylate having 1 to 14 carbon atoms in the alkyl radical and/or from 0 to 100 % by weight of an alkyl acrylate having 2 to 14 carbon atoms in the alkyl radical and from 0 to 40 % by weight of a monomer which can be copolymerised with the methacrylate or acrylate are subjected to free-radical polymerisation in the presence of an initiator from the group comprising hydroxyl group-containing peroxides, hydroperoxides or hydroxyl group-containing azo compounds which is capable of transferring hydroxyl groups onto the polymer molecule, and in the presence of a redox compound as accelerator with hydroxyl group-containing regulators of the general formula

$HO\text{-}A\text{-}S_x\text{-}B\text{-}OH_f$ (I)

in which A and B are each a divalent organic radical, and $x \geqq 2$.

**2.** Process according to Claim 1, characterised in that a regulator of the general formula (I) is used in which A and B are identical or different and are an optionally substituted o-, m- or p-arylene radical, a $-(CH_2)_y-$ group where $y \geqq 2$ or a

$$-\overset{\displaystyle S}{\overset{\|}{C}}-M-(CH_2)_y- \text{ group}$$

where $Y \geqq 2$ and M is an oxygen atom

$$-\overset{\displaystyle R}{\overset{|}{N}}- \text{ radical where } R = \text{alkyl.}$$

**3.** Process according to one of Claims 1 or 2, characterised in that a monomer mixture comprising from 30 to 100 % by weight of a methacrylate, from 0 to 50 % by weight of an acrylate and from 0 to 20 % by weight of a monomer which can be copolymerised with the (meth)acrylates is used.

**4.** Process according to one of Claims 1 to 3, characterised in that, as regulator, symmetrical disulphides of the formula (I) are used.

**5.** Process according to Claim 4, characterised in that, as regulator, bis(hydroxyethyl) disulphide is used.

**6.** Process according to one of Claims 1 to 5, characterised in that, as initiator, an aqueous hydroperoxide solution is used

7. Process according to one of Claims 1 to 6, characterised in that the comonomers and the regulator are metered into the reaction mixture at the rate at which they are consumed by the polymerisation reaction.

8. Process according to one of Claims 1 to 7, characterised in that, in order to prepare polymers containing more than two hydroxyl groups per molecule, a hydroxyl group-containing acrylate or methacrylate is added to the comonomer mixture.

9. Use of the low-molecular-weight hydroxy-functional (meth)acrylate polymers obtainable by the process of Claims 1 to 8 for the preparation of prepolymers containing isocyanate end groups by reaction with diisocyanates.

10. Use according to Claim 9, characterised in that hydroxyl group-carrying oligomers are added as reactive thinners to the hydroxy-functional (meth)acrylate polymer.

11. Use according to Claim 9 or 10, characterised in that two isocyanate equivalents are employed par hydroxyl equivalent, and the reaction is continued until all the hydroxyl groups have reacted.

12. One-component moisture-curing adhesive or sealant based on a prepolymer containing isocyanate end groups according to Claims 9 to 11, if desired other isocyanate group-containing prepolymers having polyether or polyester groups in the backbone, conventional plasticisers and, if desired, suitable fillers, pigments, thixotropic agents and catalysts.

13. Sealant and adhesive according to Claim 12, characterised in that it contains, as curing agent, a latent amine curing agent, in particular an enamine, aldimine, ketimine or oxazolidine.

14. Adhesive and sealant according to one of Claims 12 or 13, characterised in that it is transparent.

15. Adhesive and sealant according to Claim 14, characterised in that it contains only very finely divided fillers and/or fillers having a similar refractive index to the prepolymer.

**Revendications**

1. Procédé de production de polymères de (méth)-acrylate de faible poids moléculaire avec des groupes hydroxyles α,ω-terminaux avec un poids équivalent d'hydroxyle de 500 à 5.000, caractérisé en ce qu'on soumet, en se rapportant au mélange de monomères, 10 à 100% en poids d'un alkylester d'acide méthacrylique avec 1 à 14 atomes de carbone dans le fragment alkyle et/ou 0 à 100% en poids d'un alkylester d'acide acrylique avec 2 à 4 atomes de carbone dans le fragment alkyle et 0 à 40% en poids d'un monomère copolymérisable de l'ester d'acide méthacrylique au acrylique en présence d'un initiateur capable de transmettre les groupes hydroxyles à la molécule du polymère choisi dans le groupe consistant en peroxydes contenant des groupes hydroxyles hydroperoxydes ou composés azo contenant des groupes hydroxyles et en présence d'un composé rédox en tant qu'accélérateur avec des régulateurs contenant des groupes hydroxyles de la formule générale

$HO\text{-}A\text{-}S_x\text{-}B\text{-}OH$ (I)

où A et B signifient chacun un fragment organique bivalent et $x \geqq 2$ , à une polymérisation radicalaire.

2. Procédé selon la revendication 1 caractérisé en ce qu'on utilise un régulateur de la formule générale (I) dans lequel A et B sont identiques ou différents et dans un cas donné indiquent un fragment o-, m- ou p-aryle-substitué, un groupe $-(CH_2)_y$ où $y \geqq 2$ ou bien un groupe

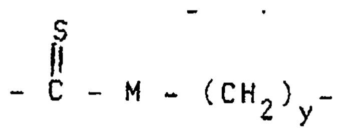

où $y \geqq 2$ ,

M étant un atome d'oxygène ou un fragment

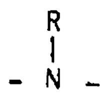 R étant alkyle.

3. Procédé selon l'une quelconque des revendications 1 ou 2, caractérisé en ce qu'on utilise un mélange de monomères de 30 à 100% en poids de méthacrylate, de 0 à 50% en poids d'acrylate et de 0 à 20% en poids d'un monomère copolymérisable avec le (méth)acrylate.

4. Procédé selon l'une quelconque des revendications 1 à 3, caractérisé en ce qu'on utilise, comme régulateur, un disulfure symétrique de la formule (I).

5. Procédé selon la revendication 4, caractérisé en ce qu'on utilise, comme régulateur le bis-(hydroxyéthyl)-disulfure.

6. Procédé selon l'une quelconque des revendications 1 à 5, caractérisé en ce qu'on utilise comme initiateur une solution aqueuse d'un hydroperoxyde.

7. Procédé selon l'une quelconque des revendications 1 à 6, caractérisé en ce qu'on dose les comonomère ainsi que les régulateurs dans le mélange réactionnel à la mesure à laquelle ceux-ci seront utilisés par la réaction de polymérisation.

8. Procédé selon l'une quelconque des revendications 1 à 7, caractérisé en ce que l'on ajoute, pour la production de polymères ayant plus de deux groupes hydroxyles, par molécule du mélange de conomères, un ester d'acide acrylique ou méthacrylique contenant des groupes hydroxyles.

9. Utilisation des polymères de (méth)acrylate hydroxyfonctionnels de faible poids moléculaire obtenus par le procédé selon l'une quelconque des revendications 1 à 9 pour la production de prépolymères contenant des groupes isocyanates terminaux par transformation au moyen de diisocyanates.

10. Utilisation selon la revendication 10, caractérisée en ce qu'on ajoute, aux polymères de (méth)acrylate hydroxyfonctionnels, des oligomères porteurs de groupes hydroxyles en tant que diluants réactifs.

11. Utilisation selon la revendication 10 ou 11, caractérisée en ce que l'on utilise, par équivalent hydroxyle, deux équivalents d'isocyanate et en ce que la réaction continue jusqu'à ce que tous les groupes hydroxyles aient réagi.

12. Matière collante ou d'étanchéité à un composant et durcissant à l'humidité à base d'un prépolymère contenant des groupes terminaux d'isocyanate selon les revendications 10 à 12, le cas échéant d'autres prépolymères contenant des groupes isocyanates avec des groupements polyéthers ou polyesters dans l'arête, d'assouplissants traditionnels ainsi que le cas échéant de charges, pigments, agents thixotropos et catalyseurs appropriés.

13. Matière d'étanchéité et de collage selon la revendication 13, caractérisée en ce qu'elle contient en tant que durcisseur un durcisseur d'amine latent, en particulier une énamine, une aldimine, une cétimine ou bien une oxazolidine.

14. Matière collante ou d'étanchéité selon l'une quelconque des revendications 13 ou 14, carectérisée en ce qu'elle est transparente.

15. Matière collante ou d'étanchéité selon la revendication 15, caractérisée en ce qu'elle ne contient que des charges en très fines particules et/ou des charges ayant un indice de réfraction identique à celui du prépolymère.